# EUROPEAN PATENT APPLICATION

(11) **EP 2 383 978 A2**
(43) Date of publication of application: **02.11.2011**
(21) Application number: 11163516.5
(22) Date of filing: 21.04.2011
(51) Int. Cl.: H04N 5/14, H04N 7/26

(54) **Motion estimation**

(30) Priority: 30.04.2010 GB 1007254
(71) Applicant: Snell Limited, Berkshire RG6 4PB (GB)
(72) Inventor: Knee, Michael James, Petersfield, Hampshire GU32 2EE (GB); Diggins, Jonathan, Chesham, Buckinghamshire HP5 1YQ (GB)
(74) Representative: Garratt, Peter Douglas

(57) **Abstract**

A motion estimator has a spatial sub-sampler to receive input images; at least one motion estimator determining motion vectors between input images and sub-sampled motion vectors between sub-sampled images; an up-sampler for up-sampling the sub-sampled motion vectors; and a selector for providing a motion vector output by selecting between the motion vectors and the (up-sampled) sub-sampled motion vectors, according to motion vector confidence.

## Description

### FIELD OF INVENTION

This invention concerns motion estimation for video processing.

### BACKGROUND OF THE INVENTION

Motion compensation is applicable to a wide variety of image processing tasks. In a motion compensated process, successive images in a sequence of images are compared and the differences between the positions of portrayed objects or image features between succeeding images are evaluated and assigned as respective motion vectors applicable to those objects or image features. Motion vectors can be used to combine image information from different images in the sequence without creating 'multiple image' artefacts. Typically, succeeding images in a sequence correspond to different temporal samples of a scene, such as film frames or interlaced video fields. However, motion compensation is equally applicable to other image sequences, for example views of a common scene having different viewpoints spaced along a path.

Historically the development of motion compensated video processing has concentrated on processing interlaced television images with temporal sampling rates (i.e. field frequencies) of 50 Hz and above. More recently developments in high definition television and digital cinematography have led to the development of motion compensated processes intended for temporal sampling rates around 24 Hz. At these lower rates the magnitudes of motion vectors are correspondingly greater and the process of motion estimation, in which motion vectors are evaluated, becomes more difficult. The low temporal sampling rate results in large differences between the positions of the same object in succeeding images, and the control of the depth of field for artistic reasons makes it difficult to determine the exact positions of some objects.

Hierarchical methods of motion estimation have been proposed, in which the result of a low-resolution, wide-range motion estimation process is refined according to the result of a higher-resolution, narrower-range process; and that process may itself be refined a number of times. In theory this enables accurate motion vectors to be derived for large inter-image positional differences. However, these methods are complex to implement, especially if the hierarchy comprises many levels.

The current disclosure teaches techniques to improve motion compensated processing.

### SUMMARY OF THE INVENTION

The invention consists in a method and apparatus for motion estimation that determines motion vectors that describe pixel positional differences between input images in a sequence of images wherein the spatial resolution of the said motion estimation is chosen according to a measure of motion vector confidence.

Suitably, the spatial resolution is varied by changing the number of pixels used to represent the input images that are compared.

Advantageously, motion vectors are determined by comparison between a first image region in a first image from the said sequence of images and a second image region in a second image in the said sequence and the size of at least one of the said image regions is chosen in dependence upon a measure of motion vector confidence.

In certain embodiments, a plurality of motion estimators operate at different spatial resolutions and output motion vectors for an image region are taken from the estimator providing highest confidence vectors for that region.

In a preferred embodiment, motion vectors are derived from phase correlation. Alternatively, vectors are derived from block matching.

In a different aspect, the present invention consists in a method of motion estimation comprising the steps of determining motion vectors that describe pixel positional differences between input images in a sequence of images at a motion vector spatial resolution that is variable; providing a measure of motion vector confidence; and varying the said spatial resolution according to said measure of motion vector confidence. The motion vector spatial resolution may be varied for every pixel or every pixel block in the input image.

In a further aspect, the present invention consists in a method of motion estimation comprising the steps of determining first motion vectors that describe pixel positional differences between input images in a sequence of images at a first motion vector spatial resolution; determining second motion vectors that describe pixel positional differences between input images in a sequence of images at a second motion vector spatial resolution; comparing a first measure of error in a first motion vector with a second measure of error in a second motion vector: and switching between the first motion vectors and the second motion vectors in accordance with the results of said comparison. The motion vectors may be switched for every pixel or every pixel block in the input image. The motion vectors may be determined by comparison between a first image region in a first image from the said sequence of images and a second image region in a second image in the said sequence and the size of at least one of the said image regions is chosen in dependence upon a measure of motion vector confidence. A plurality of motion estimators may operate at different spatial resolutions and output motion vectors for an image region are taken from the estimator providing highest confidence vectors for that region.

### BRIEF DESCRIPTION OF THE DRAWINGS

An example of the invention will now be described with reference to the drawings in which:
Figure 1 shows a block diagram of a motion estimation system according to a first embodiment of the invention.
Figure 2 shows a block diagram of a motion estimation system according to a second embodiment of the invention.

### DETAILED DESCRIPTION OF THE INVENTION

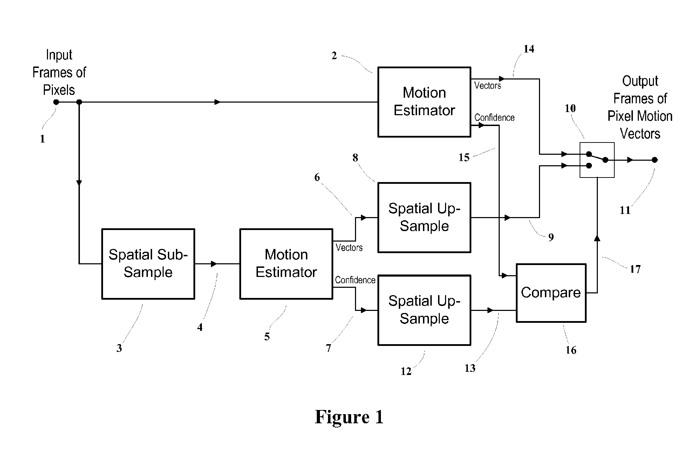

A block diagram of a first exemplary embodiment is shown in Figure 1. This embodiment achieves accurate motion estimation combined with the ability to 'track' large inter-image displacements. The figure assumes a real-time, streaming process operating on pixel values for frames of progressively scanned images. Typically pixel luminance values are used for motion estimation. The skilled person will appreciate that the invention may equally be applied to non-real time image processing, including software processes, and that interlaced image formats can be processed in an analogous manner. Pixel values other than luminance values can also be used.

In the system illustrated in Figure 1, a stream of frames of pixel values is input at terminal (1) and passed to a known first motion estimator (2) that determines a motion vector for each pixel of the current frame. The respective motion vector for each pixel describes the spatial difference between: the location in the previous frame that matches that pixel; and, the location of that pixel in the current frame. The first motion estimator (2) also determines a 'confidence value' associated with each motion vector. The respective confidence value is a measure of the likely accuracy of that motion vector. Typically the motion vectors are derived by phase-correlation and the confidence is derived from the height of a corresponding peak in a correlation surface and/or the sharpness of that peak. Alternative known motion measurement methods can be used by the first motion estimator (2); for example, block matching may be used and confidence values can be determined from match errors.

The stream of frames of pixel values (1) is also input to a spatial sub-sampling block (3), which spatially sub-samples each input frame by halving the number of rows of samples (e.g. television lines) and halving the number of samples in each row of samples. The spatial sub-sampling block (3) also re-formats the sub-sampled pixels according to the format of the input frames (1) by surrounding the sub-sampled pixels with blank pixels so that the resulting frame comprises a 'shrunken' image filling one quarter of the total image area, surrounded by a blank border. Typically the sub-sampling processes are preceded by suitable lowpass filters in the well known manner so as to avoid aliasing.

The sub-sampled image data (4) is input to a second motion estimator (5) that is identical, or similar, to the first motion estimator (2), and derives motion vectors (6) with associated confidence values (7) for its input pixels. These motion vectors are input to a vector up-sampling block (8), which spatially expands the vector field for each frame and up-scales the magnitudes of the vectors.

The spatial up-sampling of the vectors (6) compensates for the spatial sub-sampling (3) of the input data (1). Thus the up-sampled vector field extends over the whole image area, not just over the central quarter of the area. This up-sampling can make use of the 'picture attribute allocation' technique described in International Patent Application WO 2008/009981. Any vectors for the blank pixels surrounding the down-sampled image are moved outside the active image area by the up-sampling process and are discarded.

The magnitude up-scaling of the vectors (6) in the spatial up-sampler (8) compensates for the spatial down-sampling (3). The vector magnitudes are multiplied by a factor of two so that they correspond to positional difference distances at the full image size.

The up-scaled vectors (9) are input to a first terminal of a changeover switch (10), which provides output vectors motion vectors (11).

Because the input frames (1) have been reduced in size at the input to the second motion estimator (5), the inter-frame differences that are represented by the vectors are also reduced in size, and so the motion estimator is better able to measure them. The vectors (9) derived by up-sampling and up-scaling the vectors (6) will more accurately represent fast motion than the vectors from the first motion estimator (2); this is because they are derived from measurement of the shorter inter-frame distances of the sub-sampled image data (4). However, in finely-detailed areas, the vectors from the first motion estimator (2) will be more accurate than the vectors (9), because they are derived from the full-resolution image data (1).

The set of confidence values (7) for the pixels of the sub-sampled and reformatted frame (4) are spatially up-sampled in an up-sampler (12) to provide an up-sampled set of confidence values (13) for each frame. These up-sampled values comprise a respective confidence value for each of the pixel vectors (9) from the vector up-sampler (8). The confidence up-sampler (12) operates in the same way as the vector up-sampler (8) so that data relating to pixels of the sub-sampled frame (4) is moved to the respective positions in the frame corresponding to the full-size input frames (1). The vectors (9), and their associated confidence values (13), are thus spatially aligned with the vectors (14) and confidence values (15) from the first motion estimator (2).

A confidence comparator (16) compares the respective 'small image' confidence (13) with the 'full-size image' confidence (15) for each pixel vector. The result of this comparison is a switch control signal (17) that causes the changeover switch (10) to select the vector having higher confidence for output a terminal (11).

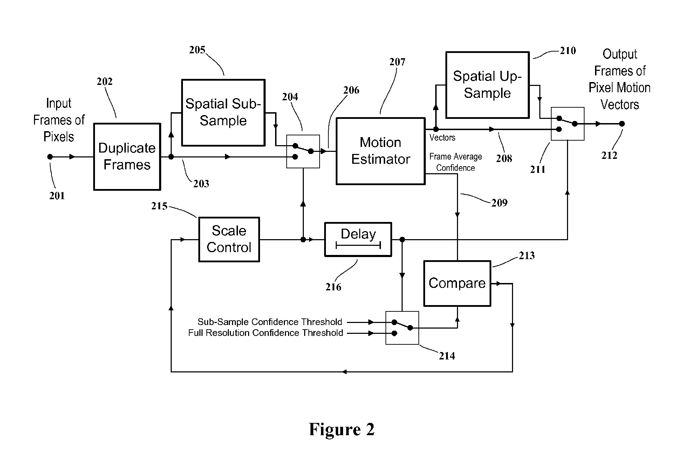

The system of Figure 1 requires two motion estimators, and this may not always be practicable or economic. An alternative embodiment of the invention that uses a single motion estimator will now be described with reference to Figure 2.

Input frames of pixel values (201) are passed to a frame duplicator (202) that makes a copy of each input frame and outputs two identical frames for every input frame. The data rate at the output (203) of the frame duplicator (202) is thus twice that of the input (201).

The 'double-rate' stream of frames (203) is input to a changeover switch (204) and a spatial sub-sampler (205) that operates in the same way as the spatial sub-sampler (3) of the system of Figure 1 to produce 'shrunken' frames surrounded by blank borders. A second input of the changeover switch (204) receives the full-size, double rate frames (203). The output (206) of the changeover switch (204) is thus a stream of double rate frames which may be either full size or reduced size depending on the control of the switch. This output is passed to a known motion estimator (207) that produces sets of motion vectors for the pixels of its input frames in a similar way to the motion estimators (2) and (5) of the system of Figure 1.

However, the motion estimator (207) only measures motion between pairs of its input frames (206) that correspond to different input frames (201) It does not measure the motion between duplicated frames, and thus its output motion vectors (208) have a pixel rate equal to that of the input frames (201).

The motion estimator (207) also outputs a vector confidence value for each frame of motion vectors. This confidence output (209) is an average of the confidence values for all the vectors of the current frame.

The frames of motion vectors (208) are input to a spatial up-sampler (210) and a changeover switch (211). These two elements operate in inverse manner to the sub-sampler (205) and the switch (204) so that the output (212) of the changeover switch (211) always comprises a full-size set of pixel motion vectors regardless of whether the motion estimator (207) compared sub-sampled frames or unmodified input frames.

The frame average confidence (209) from the motion estimator (207) is input to a confidence comparator (213), which compares it with one of two thresholds selected by a third changeover switch (214). The output from the comparator (213) controls a scale control block (215), which controls the three changeover switches. If the frame average confidence (209) for the current frame of vectors (208) is lower than the threshold selected by the changeover switch (214), the comparator output causes the scale control block (215) to change the setting of the changeover switch (204) just prior to the input of the next duplicate frame to the motion estimator (207). This will change the scale of the frames used to derive the next set of motion vectors.

The settings of the changeover switches (211) and (214) are also changed after a delay provided by a control delay block (216). This delay ensures that these two switches change state just prior to the output from the motion estimator (207) of vectors and confidence at the newly-changed scale.

However, if the frame average confidence of the currently output frame of vectors is higher than the threshold selected by the changeover switch (214), the current switch settings are maintained. The scale of the motion estimation between each pair of input frames (1) is thus chosen in dependence upon the frame average confidence for the vectors of a previous inter-frame motion measurement; typically this is the measurement for the preceding input inter-frame difference.

The two threshold values selected by the changeover switch (214) are chosen so that fast-moving and/or less detailed frames are measured with sub-sampled image data; and, slowly moving and/or more detailed frames are measured with full-resolution image data.

In the two above-described embodiments of the invention, the spatial resolution of the measurement of the vector field is changed (so as to improve the accuracy of the measured vectors) by changing the number of pixels used to represent the images that are measured. Most motion estimators derive vectors by comparing contiguous 'blocks' of pixels in adjacent frames of the sequence of frames. In phase correlation the phase of spatial frequency components in a block of pixels from one image is compared with the phase of spatial frequency components in a co-located block of pixels from another image. In block matching a block of pixels from one image is compared with identically constructed blocks of pixels at various locations in another image and the location of best match used to determine motion vectors.

For these block-based methods the spatial resolution of the motion measurement can be varied by changing the size of the blocks of pixels that are compared. For example, in the system of Figure 1, the spatial sub-sampler (3), the confidence up-sampler (12) and the vector up-sampler (8) can be removed; and the two motion estimators (2) and (5) designed use differently-sized blocks. The switch (10) will then choose, for each pixel, the motion vector from the estimator producing the vector with the highest confidence.

Similarly in the system of Figure 2 the spatial sub-sampler (205), its associated changeover switch (204), the spatial up-sampler (210) and its associated changeover switch (211) can be removed; and the motion estimator (207) designed to operate with a block size determined by the scale control block (215). The choice of block size for each inter-frame comparison will then depend on the average confidence of the vectors measured for a previous inter-frame measurement.

The system of Figure 2 can also be modified to avoid the need for frame duplication if measured motion vectors can be corrected to account for measurements between differently-sized blocks. Where a large block is compared with a smaller block the resulting motion vectors will have a 'zoom' component due to the change in image size relative to the block size. As this difference is known from the characteristics of the spatial sub-sampler (205), the vectors can be corrected for it by subtracting the known zoom component of the vector. In such a system the spatial up-sampler (210) would be replaced by a vector correction block that subtracts the relevant zoom component from vectors measured between differently-sized blocks.

In the embodiments described so far vector confidence values from a motion estimator that provides output vectors are used to determine the spatial resolution of the motion measurement. It is also possible to use a, preferably simplified, motion estimator to determine confidence values for control purposes, without using its measured vectors. It has been found that there is some correlation between the confidence measurements at different spatial resolutions. Indeed this principle is used in the system of Figure 2, where the measured confidence at one resolution is used to 'predict' that another resolution level will result in more accurate vectors. A simplified motion estimator to derive confidence values for control purpose could use a resolution lower than the motion estimator(s) that determine(s) output vectors, and could be a one-dimensional motion estimator.

It is also possible to control the spatial resolution of a motion estimation process according to other measured characteristics of the input images, such as spatial or temporal 'activity' measures calculated from spatial or temporal differences between pixels, including sub-sampled pixels, or groups of pixels.

The methods of the invention may use motion measurement spatial resolutions that differ by ratios other than two. The resolution may be changed differently in the horizontal and vertical directions. More than two spatial resolution options may be used.

In the preceding description, motion measurement between the current frame and the preceding frame has been described. The resulting vectors are 'backward' vectors for the pixels of the current frame. The skilled person will appreciate that they are also 'forward' vectors for the previous frame and that many video processes make use of both the forward and the backward vectors for pixels. Also, some motion estimators may output more than one vector per pixel for each inter-frame comparison. When confidence values are available for these additional vectors they may be used to choose the appropriate spatial resolution for motion measurement, either for the current pixel or for a future motion measurement.

## Claims

1. A method of motion estimation, comprising the steps of comparing input images in a sequence of images to determine motion vectors that describe pixel positional differences between said input images, and varying the spatial resolution of the input images according to a measure of motion vector confidence.

2. A method according to Claim 1, in which the spatial resolution is varied by changing the number of pixels used to represent the input images that are compared.

3. A method according to Claim 1, in which motion vectors are determined by comparison between a first image region in a first image from the said sequence of images and a second image region in a second image in the said sequence and the size of at least one of the said image regions is chosen in dependence upon a measure of motion vector confidence.

4. A method according to any one of Claims 1 to 3, in which motion estimation is conducted at different spatial resolutions and output motion vectors for an image or image region are taken from the motion estimation process providing highest confidence vectors for that image or image region.

5. A method according to Claim 1, where motion vectors are derived from phase correlation and said measure of motion vector confidence is taken from a phase correlation peak height or where motion vectors are derived from block matching and said measure of motion vector confidence is taken from a block match error

6. A method according to claim 1, comprising the steps of: determining motion vectors that describe pixel positional differences between input images in a sequence of images at a spatial image resolution that is variable; providing a measure of motion vector confidence; and varying the said spatial resolution according to said measure of motion vector confidence.

7. A method according to Claim 6, in which the spatial image resolution can be varied for every pixel or every pixel block in the input image.

8. A method according to claim 1 comprising the steps of:
determining first motion vectors that describe pixel positional differences between input images in a sequence of images at a first spatial image resolution;
determining second motion vectors that describe pixel positional differences between input images in a sequence of images at a second spatial image resolution;
comparing a first measure of error in a first motion vector with a second measure of error in a second motion vector: and
switching between the first motion vectors and the second motion vectors in accordance with the results of said comparison.

9. A method according to Claim 8 in which the motion vectors can be switched for every pixel or every pixel block in the input image.

10. A method according to Claim 8 or Claim 9 in which motion vectors are determined by comparison between a first image region in a first image from the said sequence of images and a second image region in a second image in the said sequence and the size of at least one of the said image regions is chosen in dependence upon a measure of motion vector confidence.

11. Apparatus for motion estimation comprising an input for receiving input images in a sequence of images; a spatial sub-sampler to receive input images and provide sub-sampled images; at least one motion estimator for determining first motion vectors that describe pixel positional differences between said input images and second motion vectors that describe pixel positional differences between said sub-sampled images; an up-sampler for up-sampling said second motion vectors; and a motion vector selector for providing a motion vector output by selecting between the first motion vectors and the up-sampled second motion vectors.

12. Apparatus according to Claim 11, wherein said selection is according to a measure of motion vector confidence.

13. Apparatus according to Claim 11 or Claim 12, where motion vectors are derived from phase correlation and said measure of motion vector confidence is taken from a phase correlation peak height or where motion vectors are derived from block matching and said measure of motion vector confidence is taken from a block match error.

14. Programmable apparatus programmed to implement a method according to any one of Claims 1 to 10.

15. A computer program product adapted to cause programmable apparatus to implement a method according to any one of Claims 1 to 10.
